# FASCICULE DE BREVET EUROPEEN

(11) **EP 2 997 668 B1**
(45) Date de publication et mention de la délivrance du brevet: **24.05.2017**
(21) Numéro de dépôt: 14732169.9
(22) Date de dépôt: 20.06.2014
(51) Int. Cl.: H04B 7/185, G01S 3/46, G01S 5/02, G01S 5/04, H04B 17/00

(54) **MESURE DE DIFFÉRENCE DE PHASE D'UN SIGNAL REÇU D'UN SATELLITE OU D'UN AÉRONEF POUR SA LOCALISATION EN UTILISANT DEUX RÉCEPTEURS AVEC GÉNÉRATION D'UN SIGNAL D'ÉTALONNAGE DE RÉCEPTEUR.**
MESSUNG, ZUR LOKALISIERUNG, DER PHASENDIFFERENZ EINES SATELLITEN- ODER FLUGZEUGSIGNALS, UNTER GEBRAUCH ZWEIER EMPFÄNGERN MIT ERZEUGUNG EINES EMPFÄNGERKALIBRIERUNGSSIGNALS.
PHASE DIFFERENCE MEASURE OF A SIGNAL RECEIVED FROM A SATELLITE OR AIRCRAFT FOR ITS LOCALISATION USING TWO RECEIVERS WITH GENERATION OF A RECEIVER CALIBRATION SIGNAL

(30) Priorité: 24.06.2013 FR 1355980
(43) Date de publication de la demande: 23.03.2016
(73) Titulaire: Airbus Defence and Space SAS, 78130 Les Mureaux (FR)
(72) Inventeur: VOULOUZAN, Frédéric, F-31500 Toulouse (FR); AYMES, Jean-Marc, F-31650 Saint Orens de Gameville (FR); SANCHEZ, Raphaël, F-31130 Balma (FR)
(74) Mandataire: Ipside
(86) Numéro de dépôt international: PCT/EP2014/062985
(87) Numéro de publication internationale: WO 2014/206867

(56) Documents cités:
- US-A- 4 673 944
- US-A- 5 541 608
- US-A1- 2011 260 911
- US-B1- 7 961 147

## Description

### DOMAINE TECHNIQUE

La présente invention appartient au domaine de l'observation d'engins spatiaux ou aériens depuis la Terre, et concerne plus particulièrement un système de calibration d'une différence de phase, dite « différence de phase utile », entre des signaux reçus sur respectivement une première antenne de réception et une seconde antenne de réception d'une base de réception.

La présente invention trouve une application particulièrement avantageuse, bien que non limitative, pour la restitution d'orbite de satellites, notamment pour des satellites en orbite géostationnaire (GEO).

### ÉTAT DE LA TECHNIQUE

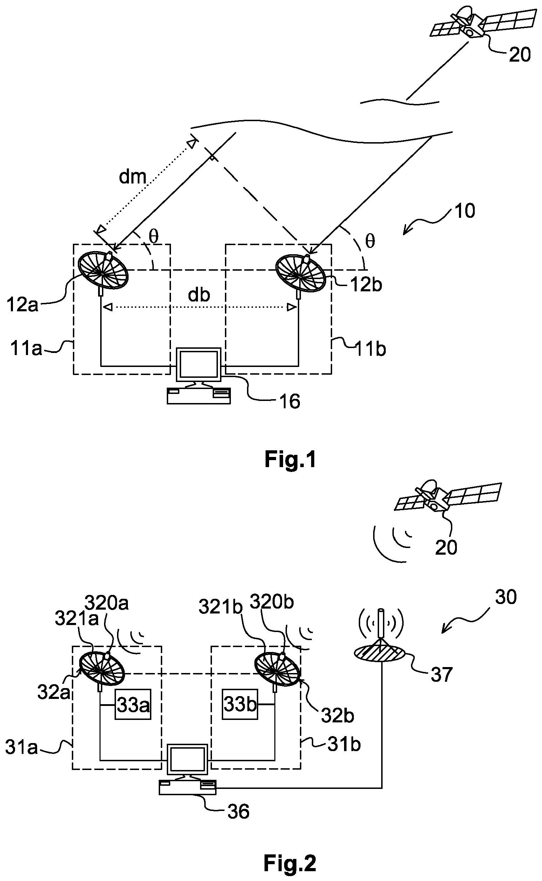

La figure 1 représente schématiquement un système 10 connu de restitution d'orbite d'un satellite 20 en orbite GEO.

Le système 10 connu de restitution d'orbite comporte une première chaîne de réception 11 a et une seconde chaîne de réception 11 b reliées à un dispositif 16 de traitement qui effectue les traitements desdits signaux reçus sur lesdites première et seconde chaînes de réception 11a, 11b. Les première et seconde chaînes de réception 11a, 11b comportent respectivement une première antenne de réception 12a et une seconde antenne de réception 12b, formant une base de réception du système 10 de restitution d'orbite.

Le satellite 20 émet un signal cible en direction de la Terre, et ce signal cible est reçu par chacune des première et seconde antennes de réception 12a, 12b de la base de réception.

L'orbite du satellite 20 est restituée par exemple à partir notamment d'une estimation d'une différence de marche entre les deux trajets suivis par ledit signal cible pour arriver sur respectivement la première antenne de réception 12a et la seconde antenne de réception 12b de la base de réception.

La différence de marche, désignée par « dm » sur la figure 1, est estimée en fonction d'une mesure de différence de phase entre des signaux correspondant au signal cible reçu sur respectivement la première antenne de réception 12a et la seconde antenne de réception 12b.

La différence de marche dm est par exemple mise en oeuvre pour estimer une direction d'arrivée, désignée par « θ » sur la figure 1, du signal cible par rapport à la base de réception, généralement en supposant que ladite direction d'arrivée θ est la même sur chacune des première et seconde antennes de réception 12a, 12b (cette approximation étant valable dès lors que la distance entre la base de réception et le satellite 20 est très supérieure à la distance, désignée par « db » sur la figure 1, entre la première antenne de réception 12a et la seconde antenne de réception 12b). Suivant un autre exemple, la différence de marche dm est utilisée directement dans un modèle de trajectoire du satellite 20 pour restituer directement l'orbite dudit satellite, en prenant éventuellement en compte d'autres mesures et/ou informations.

De manière générale, plus la distance db entre les première et seconde antennes de réception 12a, 12b de la base de réception est grande, plus l'estimation de la différence de marche dm est précise. Dans les systèmes connus de restitution d'orbite GEO, la distance db est de l'ordre de quelques centaines de mètres.

Toutefois, la précision de l'estimation de la différence de marche dépend fortement de la précision des mesures de différence de phase, qui dépend du rapport signal sur bruit/interférence du signal cible reçu par les première et seconde antennes de réception 12a, 12b. Ainsi, si ce rapport signal sur bruit/interférence est faible, la précision de l'estimation sera faible et d'autant plus sensible à la stabilité en phase des première et seconde chaînes de réception 11a, 11b. En effet, les variations de la différence de phase mesurée comprennent à la fois des variations induites par les variations de la différence de marche dm, et des variations liées aux instabilités de phase des première et seconde chaînes de réception 11a, 11b.

Pour améliorer le rapport signal sur bruit/interférence, les première et seconde antennes de réception 12a, 12b sont très directives afin de présenter des gains d'antennes respectifs très importants. Pour réduire les variations liées aux instabilités de phase des première et seconde chaînes de réception 11a, 11b, les éléments formant lesdites première et seconde chaînes de réception doivent être eux-mêmes très stables, et sont généralement durcis.

Un tel système 10 connu de restitution d'orbite GEO, pour obtenir de bonnes performances, s'avère complexe et coûteux à fabriquer. Voir aussi US 2011/260911 A1 (SAPP MICHAEL D [US]) 27 octobre 2011 (2011-10-27).

### EXPOSÉ DE L'INVENTION

La présente invention a pour objectif de remédier à tout ou partie des limitations des solutions de l'art antérieur, notamment celles exposés ci-avant.

A cet effet, la présente invention concerne un système de calibration d'une différence de phase, dite « différence de phase utile », entre des signaux correspondant à un signal radioélectrique émis par un engin spatial ou aérien, dit « signal cible », reçu par respectivement une première chaîne de réception et une seconde chaîne de réception, ladite première chaîne de réception et ladite seconde chaîne de réception comportant respectivement une première antenne de réception et une seconde antenne de réception formant une base de réception terrestre, lesdites première antenne de réception et seconde antenne de réception comportant chacune une source et un réflecteur principal adapté à réfléchir le signal cible en direction de ladite source. Ledit système comporte en outre un émetteur adapté à émettre un signal radioélectrique, dit « signal de calibration », en direction de la base de réception, au moyen d'une antenne d'émission terrestre, et la première chaîne de réception et la seconde chaîne de réception comportent des moyens respectifs, dits « moyens d'injection », distincts des réflecteurs principaux et adaptés à injecter le signal de calibration reçu par voie aérienne de l'antenne d'émission dans respectivement ladite première chaîne de réception et dans ladite seconde chaîne de réception.

Suivant des modes particuliers de réalisation, le système de calibration peut comporter en outre l'une ou plusieurs des caractéristiques suivantes, prises isolément ou suivant toutes les combinaisons techniquement possibles.

Dans un mode particulier de réalisation, le système de calibration comporte :
- des moyens adaptés à mesurer une différence de phase, dite « différence de phase de calibration », entre des signaux correspondant au signal de calibration injecté dans respectivement la première chaîne de réception et la seconde chaîne de réception,
- des moyens adaptés à compenser des variations des mesures de différence de phase de calibration sur des mesures de différence de phase utile.

Dans un mode particulier de réalisation, les moyens adaptés à mesurer la différence de phase de calibration sont configurés pour effectuer soit une corrélation des signaux injectés dans respectivement la première chaîne de réception et la seconde chaîne de réception avec le signal de calibration émis, soit une analyse desdits signaux injectés dans respectivement la première chaîne de réception et la seconde chaîne de réception au moyen d'une FFT ou d'une PLL.

Dans un mode particulier de réalisation, les moyens d'injection de la première chaîne de réception ou de la seconde chaîne de réception comportent un réflecteur additionnel adapté à réfléchir le signal de calibration en direction de la source, dit « réflecteur de calibration ».

Dans un mode particulier de réalisation, les moyens d'injection de la première chaîne de réception ou de la seconde chaîne de réception comportent une antenne de réception additionnelle dirigée vers l'antenne d'émission, dite « antenne de calibration », et un module de couplage des sorties respectives de la source et de l'antenne de calibration.

Dans un mode particulier de réalisation, la première antenne de réception et la seconde antenne de réception de la base de réception sont des antennes présentant chacune un lobe principal de rayonnement de largeur égale ou supérieure à 10°.

Dans un mode particulier de réalisation, l'engin étant un satellite en orbite géostationnaire, la première antenne de réception et la seconde antenne de réception sont agencées de sorte à avoir dans leur lobe principal de rayonnement plusieurs satellites en orbite géostationnaire.

Dans un mode particulier de réalisation, la première chaîne de réception et la seconde chaîne de réception comportant chacune au moins un module de conversion en fréquence, les moyens d'injection sont adaptés à injecter le signal de calibration dans la première chaîne de réception et la seconde chaîne de réception en des points d'injection respectifs situés en amont de chaque module de conversion en fréquence.

Dans un mode particulier de réalisation, la première chaîne de réception et la seconde chaîne de réception comportant chacune au moins un amplificateur, les moyens d'injection sont adaptés à injecter le signal de calibration dans la première chaîne de réception et la seconde chaîne de réception en des points d'injection respectifs situés en amont de chaque amplificateur.

Dans un mode particulier de réalisation, la première antenne de réception et la seconde antenne de réception sont agencées à une distance l'une de l'autre comprise entre dix mètres et un kilomètre.

Dans un mode particulier de réalisation, la distance, entre l'antenne d'émission et au moins une parmi la première antenne de réception et la seconde antenne de réception, est inférieure à la distance entre ladite première antenne de réception et ladite seconde antenne de réception.

Dans un mode particulier de réalisation, l'émetteur est configuré pour émettre un signal de calibration présentant un recouvrement fréquentiel avec le signal cible.

Dans un mode particulier de réalisation, l'émetteur est configuré pour émettre le signal de calibration en même temps que le signal cible.

Dans un mode particulier de réalisation, l'émetteur est configuré pour émettre le signal de calibration de façon continue.

Dans un mode particulier de réalisation, le signal de calibration est un signal sensiblement sinusoïdal ou un signal du type à spectre étalé par un code d'étalement de spectre.

### PRÉSENTATION DES FIGURES

L'invention sera mieux comprise à la lecture de la description suivante, donnée à titre d'exemple nullement limitatif, et faite en se référant aux figures qui représentent :
- Figure 1 : déjà citée, une représentation schématique d'un système de restitution d'orbite GEO selon l'art antérieur,
- Figure 2 : une représentation schématique d'un exemple de réalisation d'un système de calibration de différence de phase utile selon l'invention,
- Figures 3a et 3b : des représentations schématiques d'exemples de réalisation de moyens d'injection d'un système de calibration de différence de phase utile selon l'invention,
- Figure 4 : un diagramme représentant schématiquement les principales étapes d'un exemple de mise en oeuvre d'un procédé de calibration de différence de phase utile selon l'invention,
- Figure 5 : une représentation schématique d'exemples de signaux de calibration générant peu d'interférences vis-à-vis de signaux émis par un satellite.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE L'INVENTION

La figure 2 représente de façon schématique un exemple de système 30 de calibration de différence de phase, dite « différence de phase utile », entre des signaux correspondant à un signal radioélectrique émis par un engin spatial ou aérien, dit « signal cible », et reçus par une base de réception terrestre dudit système 30 de calibration.

La base de réception comporte au moins deux antennes de réception : une première antenne de réception 32a d'une première chaîne de réception 31a, et une seconde antenne de réception 32b d'une seconde chaîne de réception 31b.

Dans la suite de la description, on se place de manière non limitative dans le cas d'un engin en orbite terrestre, et plus particulièrement dans le cas d'un engin du type satellite 20 en orbite GEO, le système 30 de calibration étant par exemple un sous-système d'un système de restitution d'orbite GEO.

Rien n'exclut, suivant d'autres exemples, de considérer un satellite en orbite défilante telle qu'une orbite basse (LEO) ou moyenne (MEO), ou encore de considérer des engins autres que des satellites, notamment des engins aériens tels que des missiles, des avions, des drones, des ballons, des hélicoptères, des lanceurs de satellites, etc.

La base de réception du système 30 de calibration est terrestre, c'est-à-dire située sensiblement à la surface de la Terre (à même le sol, en haut d'un bâtiment, en haut d'un pylône, sur une plateforme maritime, etc.).

Tel qu'illustré par la figure 2, les première et seconde antennes de réception 32a, 32b de la base de réception sont du type comportant chacune une source 320a, 320b associée à un réflecteur principal 321a, 321b.

De manière conventionnelle, les réflecteurs principaux 321a, 321b sont adaptés à réfléchir des signaux radioélectriques, reçus dans un champ de vue prédéfini de chacune des première et seconde antennes de réception 32a, 32b, en direction des sources 320a, 320b associées respectives. Le champ de vue prédéfini de chacune des première et seconde antennes de réception 32a, 32b est principalement déterminé par la géométrie des réflecteurs principaux 321a, 321b, notamment par leur courbure et leurs dimensions. Dans l'exemple illustré par la figure 2, les réflecteurs principaux 321a, 321b sont des réflecteurs paraboliques.

Le satellite 20 en orbite GEO se trouve dans le champ de vue de chacune des première et seconde antennes de réception 32a, 32b, et le signal cible émis par ledit satellite 20 est réfléchi par les réflecteurs principaux 321a, 321b en direction des sources 320a, 320b respectives desdits réflecteurs principaux.

Les première et seconde antennes de réception 32a, 32b de la base de réception sont de préférence séparées d'une distance supérieure à la longueur d'onde maximale du signal cible, et inférieure à un kilomètre.

Le système 30 de calibration comporte également un dispositif 36 de traitement qui effectue les traitements desdits signaux reçus sur les première et seconde chaînes de réception 31a, 31b.

Le système 30 de calibration comporte en outre un émetteur adapté à émettre un signal radioélectrique, dit « signal de calibration », en direction de la base de réception. L'émetteur comporte un dispositif de formation du signal de calibration et au moins une antenne d'émission 37 terrestre. De préférence, l'antenne d'émission 37 et les première et seconde antennes de réception 32a, 32b sont fixes les unes par rapport aux autres, c'est-à-dire que leurs centres de phase sont fixes les uns par rapport aux autres.

Dans l'exemple non limitatif illustré par la figure 2, le dispositif de formation du signal de calibration correspond au dispositif 36 de traitement du système 30 de calibration. Rien n'exclut, suivant d'autres exemples non détaillés, d'avoir un dispositif de formation du signal de calibration distinct du dispositif 36 de traitement.

Le dispositif 36 de traitement comporte par exemple au moins un processeur et au moins une mémoire électronique dans laquelle est mémorisé un produit programme d'ordinateur, sous la forme d'un ensemble d'instructions de code de programme à exécuter pour mettre en oeuvre les différentes étapes d'un procédé 50 de calibration de différence de phase utile selon l'invention. Dans une variante, le dispositif 36 de traitement comporte également un ou des circuits logiques programmables, de type FPGA, PLD, etc., et/ou circuits intégrés spécialisés (ASIC) adaptés à mettre en oeuvre tout ou partie desdites étapes d'un procédé 50 de calibration.

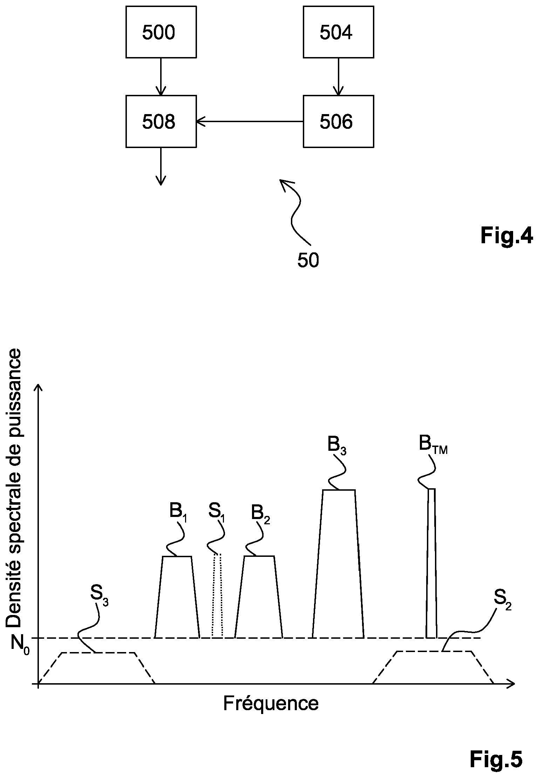

En d'autres termes, le dispositif 36 de traitement comporte un ensemble de moyens configurés de façon logicielle (produit programme d'ordinateur spécifique) et/ou matérielle (FPGA, PLD, ASIC, etc.) pour mettre en oeuvre les différentes étapes d'un procédé 50 de calibration dont un exemple de mise en oeuvre est décrit ci-après en référence à la figure 4.

Tel qu'illustré par la figure 2, les première et seconde chaînes de réception 31a, 31b comportent en outre des moyens respectifs, dits « moyens d'injection » 33a, 33b, adaptés à injecter le signal de calibration, reçu par voie aérienne de l'antenne d'émission 37, dans respectivement ladite première chaîne de réception 31a et ladite seconde chaîne de réception 31b.

Du fait des moyens d'injection 33a, 33b, ledit signal de calibration est soumis, après les points d'injection, aux mêmes instabilités de phase que le signal cible. Avant les points d'injection, le signal de calibration reçu, émis par une même antenne d'émission 37, se propage par voie aérienne en direction des moyens d'injection respectifs de la première chaîne de réception 31a et de la seconde chaîne de réception 31b, et les instabilités de phase subies sur ces chemins aériens sont négligeables par rapport aux instabilités de phase desdites première et seconde chaîne de réception 31a, 31b.

De préférence, le signal de calibration est injecté le plus en amont possible des première et seconde chaînes de réception 31a, 31b, afin de soumettre le signal de calibration à l'essentiel des instabilités de phase introduites par lesdites première et seconde chaînes de réception 31a, 31b.

Lesdits moyens d'injection 33a, 33b sont avantageusement distincts des réflecteurs principaux 321a, 321b. Ainsi, les moyens d'injection 33a, 33b peuvent être optimisés pour la réception du signal de calibration, tandis que les réflecteurs principaux 321a, 321b peuvent être optimisés pour la réception du signal cible.

Il est à noter que, sans les moyens d'injection 33a, 33b, il serait dans certains cas néanmoins possible de recevoir le signal de calibration par l'intermédiaire des réflecteurs principaux 321a, 321b. Toutefois, le signal de calibration n'atteindrait les sources 320a, 320b que grâce à des diffractions sur les bords des réflecteurs principaux 321a, 321b, sur des structures portant les sources 320a, 320b et/ou portant lesdits réflecteurs principaux 321a, 321b, etc. Par conséquent, le trajet radioélectrique du signal de calibration jusqu'aux sources 320a, 320b serait trop instable et/ou le rapport signal de calibration sur bruit serait insuffisant pour observer les instabilités de phase auxquelles est soumis le signal cible.

De préférence, l'antenne d'émission 37, les première et seconde antennes de réception 32a, 32b et les moyens d'injection 33a, 33b sont fixes les uns par rapport aux autres.

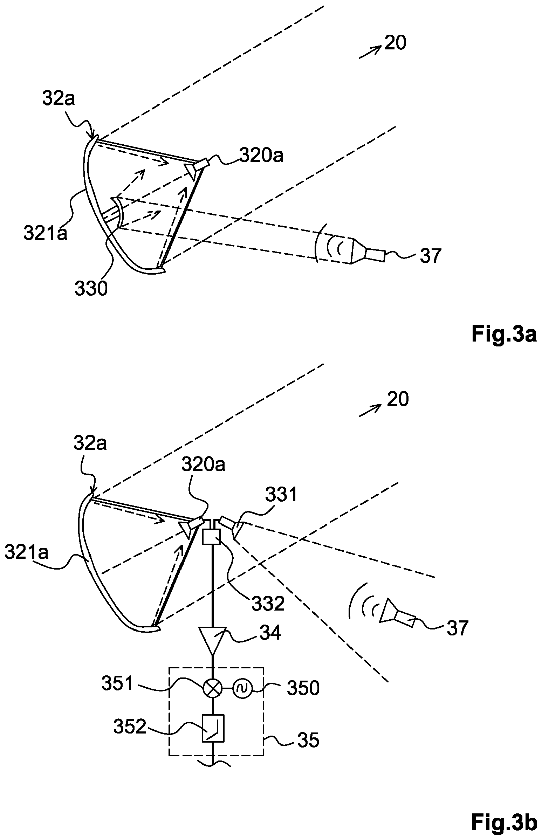

Les figures 3a et 3b représentent deux exemples de réalisation de moyens d'injection 33a, 33b. Sur ces figures, seuls les moyens d'injection 33a de la première chaîne de réception 31a sont représentés. Les moyens d'injection 33b de la seconde chaîne de réception 31b sont de préférence de même type que ceux de la première chaîne de réception 31a. Rien n'exclut cependant de considérer, pour les première et seconde chaînes de réception 31a, 31b, des moyens d'injection 33a, 33b respectifs de types différents.

La figure 3a représente un mode préféré de réalisation des moyens d'injection 33a, dans lequel lesdits moyens d'injection comportent un réflecteur additionnel, dit « réflecteur de calibration » 330, adapté à réfléchir le signal de calibration, émis par l'antenne d'émission 37, en direction de la source 320a de la première antenne de réception 32a.

Le mode de réalisation illustré par la figure 3a est particulièrement avantageux car le signal de calibration est soumis aux mêmes instabilités de phase que le signal cible, à l'exception des instabilités de phases subies sur les chemins aériens du signal de calibration et du signal cible, qui sont cependant négligeables par rapport aux instabilités de phases introduites par les première et seconde chaînes de réception 31a, 31b. En effet, le signal de calibration et le signal cible sont tous deux reçus par l'intermédiaire de la source 320a.

En outre, on comprend que le réflecteur de calibration 330 peut être optimisé pour la réception du signal de calibration, en s'assurant toutefois de ne pas trop perturber la réception du signal cible. Dans l'exemple illustré par la figure 3a, le réflecteur principal 321a est un réflecteur parabolique convexe (c'est-à-dire arrondi en direction opposée de la source 320a). Le réflecteur de calibration 330, optimisé pour la réception du signal de calibration, est de courbure différente de celle du réflecteur principal 321 a, et est par exemple concave (c'est-à-dire arrondi en direction de ladite source 320a) de sorte à assurer une certaine tolérance vis-à-vis de la position de l'antenne d'émission 37 vis-à-vis des première et seconde antennes de réception 32a, 32b.

Dans l'exemple illustré par la figure 3a, le réflecteur de calibration 330 est fixé à la surface du réflecteur principal 321 a. Rien n'exclut, suivant d'autres exemples, d'agencer différemment ledit réflecteur de calibration 330 dès lors qu'il permet de réfléchir le signal de calibration en direction de la source 320a. Suivant un autre exemple non limitatif, le réflecteur de calibration 330 est fixé à un bras de support à proximité de la source 320a ; dans ce cas les dimensions dudit réflecteur de calibration 330 sont limitées de sorte à masquer le moins possible le réflecteur principal 321a.

Tel qu'indiqué précédemment, les moyens d'injection 33a, 33b sont de préférence distincts des réflecteurs principaux 321a, 321b. Dans l'exemple illustré par la figure 3a, le réflecteur de calibration 330 est matériellement distinct du réflecteur principal 321a. Rien n'exclut cependant que ledit réflecteur de calibration 330 et ledit réflecteur principal 321a soient constitués par un même réflecteur global. En effet, dans le cas d'un réflecteur global, le réflecteur de calibration 330 est considéré comme un moyen distinct du réflecteur principal 321a dès lors qu'ils correspondent à des surfaces de réflexion distinctes dudit réflecteur global, optimisées respectivement pour la réception du signal de calibration et pour la réception du signal cible (par exemple respectivement concave et convexe).

La figure 3b représente un autre mode de réalisation des moyens d'injection 33a, dans lequel lesdits moyens d'injection comportent une antenne de réception additionnelle dirigée vers l'antenne d'émission 37, dite « antenne de calibration » 331, et un module 332 de couplage des sorties respectives de la source 321 a et de l'antenne de calibration 331.

Le mode de réalisation illustré par la figure 3b est avantageux, par rapport à l'ajout d'un réflecteur de calibration 330, car le trajet radioélectrique du signal cible depuis le réflecteur principal 321 a vers la source 320a ne risque pas d'être bloqué.

Le signal de calibration et le signal cible sont cependant reçus par respectivement l'antenne de calibration 331 et la source 320a, de sorte que les déphasages introduits par la première chaîne de réception 31 a sur le signal de calibration et le signal cible ne sont pas strictement les mêmes.

Toutefois, les différences des déphasages introduits, liées à la réception par respectivement l'antenne de calibration 331 et la source 320a, sont négligeables par rapport aux instabilités de phase introduites par les éléments de la première chaîne de réception 31a se trouvant en amont du point d'injection.

Tel qu'illustré par la figure 3b, la première chaîne de réception 31a comporte par exemple un amplificateur 34 ou LNA (« Low Noise Amplifier ») et un module 35 de conversion en fréquence. Dans l'exemple illustré par la figure 3b, le module 35 de conversion en fréquence comporte un oscillateur local 350, un mélangeur 351 et un filtre 352. La première chaîne de réception 31 a peut également comporter d'autres éléments, y compris d'autres amplificateurs et/ou modules de conversion en fréquence.

L'amplificateur 34 et le module 35 de conversion en fréquence sont, de manière connue, à l'origine d'instabilités de phase. Le module 332 de couplage est par conséquent avantageusement agencé, dans la première chaîne de réception 31a, entre d'une part la source 320a et, d'autre part, l'amplificateur 34 et le module 35 de conversion en fréquence. De la sorte, le signal de calibration est également soumis aux instabilités de phase introduites par ledit amplificateur 34 et ledit module 35 de conversion en fréquence.

De manière plus générale, si la première chaîne de réception 31a (respectivement la seconde chaîne de réception 31b) comporte plusieurs modules 35 de conversion en fréquence et/ou plusieurs amplificateurs 34, le module 332 de couplage est de préférence agencé en aval de la source 320a et en amont de chaque module 35 de conversion en fréquence et/ou chaque amplificateur 34 de ladite première chaîne de réception 31a (respectivement ladite seconde chaîne de réception 31b).

De telles dispositions permettent d'assurer que, quels que soient les moyens d'injection considérés, le signal de calibration et le signal cible sont, pour l'essentiel, soumis aux mêmes instabilités de phase.

La figure 4 représente les principales étapes d'un exemple de mise en oeuvre d'un procédé 50 de calibration de différence phase utile du signal cible émis par le satellite 20.

Le procédé 50 de calibration comporte notamment une étape 500 de mesure d'une différence de phase utile entre deux signaux correspondant au signal cible : un premier signal reçu par la première antenne de réception 32a et un second signal reçu par la seconde antenne de réception 32b.

Il est à noter que la mesure de différence de phase utile peut s'avérer ambigüe lorsque la distance entre la première antenne de réception 32a et la seconde antenne de réception 32b est supérieure à la longueur d'onde sur laquelle est émis le signal cible.

A titre d'exemple, pour des fréquences de l'ordre de la dizaine de gigahertz (GHz), traditionnellement considérées pour les communications par satellite en orbite GEO, la longueur d'onde est de l'ordre de quelques centimètres à quelques dizaines de centimètres. On comprend qu'en considérant une distance entre la première antenne de réception 32a et la seconde antenne de réception 32b comprise entre dix mètres et un kilomètre, la mesure de différence de phase utile pourra s'avérer ambigüe. La levée de cette ambiguïté sort du cadre de l'invention, et peut être effectuée en utilisant des moyens considérés comme connus de l'homme de l'art.

Dans l'exemple non limitatif illustré par la figure 4, le procédé 50 de calibration de différence de phase utile comporte en outre les étapes de :
- 504 émission d'un signal de calibration, au moyen de l'antenne d'émission 37, en direction de la base de réception,
- 506 mesure, par le dispositif 36 de traitement, d'une différence de phase, dite « différence de phase de calibration » entre deux signaux correspondant au signal de calibration : un premier signal injecté dans la première chaîne de réception 31a et un second signal injecté dans la seconde chaîne de réception 31b par les moyens d'injection respectivement 33a et 33b,
- 508 compensation des variations des mesures de différence de phase de calibration sur les mesures de différence de phase utile.

Du fait des moyens d'injection 33a, 33b, le signal de calibration est soumis au moins partiellement aux mêmes instabilités de phase que le signal cible. Ainsi, les variations de différence de phase de calibration constituent une estimation des instabilités de phase desdites chaînes de réception, et peuvent donc être utilisées pour compenser ces instabilités de phase sur les mesures de différence de phase utile.

On comprend donc que, du fait de l'émission et du traitement du signal de calibration, les instabilités de phase, introduites par les chaînes de réception reliant les première et seconde antennes de réception 32a, 32b au dispositif 36 de traitement, pourront être au moins partiellement compensées par un traitement adapté des mesures de différence de phase de calibration et des mesures de différence de phase utile.

Par conséquent, les contraintes de conception desdites chaînes de réception peuvent être relâchées par rapport à l'art antérieur. En particulier, la stabilité en phase de ces chaînes de réception peut être inférieure à celles des solutions de l'art antérieur puisque les instabilités de phase peuvent être compensées grâce à l'émission et au traitement du signal de calibration.

Dans un mode particulier de mise en oeuvre, au cours de l'étape 506 de mesure de différence de phase de calibration, le dispositif 36 de traitement effectue une corrélation des signaux injectés dans respectivement la première chaîne de réception 31 a et la seconde chaîne de réception 31 b par le signal de calibration émis, et calcule la différence de phase de calibration comme étant la différence entre les phases des signaux ainsi obtenus par corrélation.

Dans le cas illustré par la figure 2 où le dispositif 36 de traitement effectue également la formation du signal de calibration, ledit signal de calibration émis est directement connu dudit dispositif de traitement. Lorsque le dispositif de formation du signal de calibration est distinct du dispositif 36 de traitement, le signal de calibration est par exemple prédéfini pour le système 30 de calibration, et un signal de calibration de référence est mémorisé dans une mémoire électronique du dispositif 36 de traitement, ledit signal de calibration de référence étant utilisé pour la corrélation avec les signaux reçus sur respectivement la première antenne de réception 32a et la seconde antenne de réception 32b de la base de réception.

On entend, par « corrélation », le produit complexe d'un premier signal par un second signal, ledit second signal étant préalablement conjugué, suivi d'une moyenne dudit produit sur une fenêtre glissante. Il est à noter que la corrélation des signaux reçus par le signal de calibration effectivement émis conduit à l'amélioration du rapport signal sur bruit/interférence pour les mesures de différence de phase de calibration. En effet, le bruit thermique est moyenné sur la durée de la fenêtre glissante (par exemple la durée du signal de calibration), de sorte que sa puissance est diminuée. En outre la puissance d'autres signaux, différents du signal de calibration, tels que le signal cible ou des signaux émis par des brouilleurs dans la bande fréquentielle dudit signal de calibration, est également réduite si ceux-ci présentent une faible corrélation avec le signal de calibration émis.

Une telle amélioration du rapport signal sur bruit/interférence par corrélation est désignée ci-après par « gain de traitement ».

Il est à noter que rien n'exclut, suivant d'autres exemples non détaillés par la suite, d'effectuer la mesure de différence de phase de calibration autrement que par corrélation. Notamment, lorsque le signal de calibration est un signal sensiblement sinusoïdal (également connu sous le nom de « Continuous Wave » ou CW), le dispositif 36 de traitement peut mesurer les phases des signaux injectés dans respectivement la première chaîne de réception 31a et la seconde chaîne de réception 31b à l'aide d'une PLL (« Phase Locked Loop »), d'une FFT (« Fast Fourier Transform »), etc., et calculer la différence entre lesdites phases ainsi mesurées.

Le gain de traitement, décrit ci-avant en référence à la corrélation, existe quelle que soit la méthode utilisée de mesure de différence de phase de calibration, dès lors que celle-ci met en oeuvre une intégration de mesures élémentaires.

Du fait du gain de traitement, introduit par exemple par corrélation, le rapport signal sur bruit/interférence des signaux reçus avant corrélation, correspondant au signal de calibration émis, pourra être faible sans préjudice pour les mesures de différence de phase de calibration. Par exemple, le gain de traitement pourra permettre de compenser un gain faible d'une antenne de calibration 331. Ainsi, les contraintes de positionnement de l'antenne d'émission 37 de l'émetteur, par rapport à la base de réception, seront relâchées grâce au gain de traitement.

Il est à noter que le signal de calibration est préférentiellement émis dans une même bande fréquentielle que le signal cible (c'est-à-dire que le signal de calibration et le signal cible présentent un recouvrement fréquentiel), ou dans une bande fréquentielle adjacente de celle du signal cible. Par « bandes fréquentielles adjacentes », on entend que lesdites bandes fréquentielles sont séparées par au plus 10 mégahertz (MHz).

En effet, les instabilités de phase des première et seconde chaînes de réception 31a, 31b peuvent dépendre de la fréquence.

En émettant le signal de calibration dans la bande fréquentielle du signal cible, ou dans une bande fréquentielle adjacente, ledit signal de calibration sera soumis sensiblement aux mêmes instabilités de phase que le signal cible, de sorte que les variations des mesures de différence de phase de calibration seront effectivement représentatives des instabilités de phase affectant le signal cible.

Toutefois, l'émission du signal de calibration dans une bande fréquentielle proche de la bande fréquentielle utilisée pour les communications avec le satellite 20 génèrera des interférences. De telles interférences seront générées non seulement au niveau de la base de réception, mais également au niveau d'autres terminaux terrestres et/ou stations sol, se trouvant à proximité de l'antenne d'émission 37, et communiquant avec le satellite 20 ou avec d'autres satellites utilisant les mêmes bandes fréquentielles.

Du fait du gain de traitement, introduit par exemple par corrélation, la puissance d'émission du signal de calibration par l'émetteur pourra être réduite, ce qui présente l'avantage de réduire les interférences, notamment lorsque le signal de calibration est émis en même temps que le signal cible. En particulier, le signal de calibration peut alors être émis de façon continue, ce qui permet d'effectuer une calibration en continu des variations liées aux instabilités de phase des première et seconde chaînes de réception 31a, 31b.

Dans un mode préféré de réalisation du système 30 de calibration, l'antenne d'émission 37 de l'émetteur est en outre située à proximité de la base de réception. De telles dispositions permettent de réduire encore la puissance d'émission du signal de calibration, et par conséquent de réduire davantage les dimensions d'une zone autour de l'antenne d'émission 37 dans laquelle des interférences sont susceptibles d'être générées. Par exemple, la distance, entre l'antenne d'émission 37 de l'émetteur et au moins une parmi la première antenne de réception 32a et la seconde antenne de réception 32b, est inférieure à la distance entre ladite première antenne de réception 32a et ladite seconde antenne de réception 32b. Ceci est également rendu possible par les moyens d'injection 33a, 33b grâce auxquels l'antenne d'émission 37 ne doit pas être nécessairement dans le champ de vue des première et seconde antennes de réception 32a, 32b de la base de réception.

Différents types de signal de calibration peuvent être mis en oeuvre, permettant de mesurer la différence de phase de calibration tout en minimisant les interférences introduites sur le signal cible pour lequel on cherche à calibrer une différence de phase utile.

Suivant un premier exemple, le signal de calibration est un signal CW. Un tel signal de calibration présente l'avantage d'être simple à générer. En outre, un tel signal de calibration est simple à utiliser dans la mesure où il occupe une bande fréquentielle réduite, dont la fréquence centrale peut être choisie très proche de la bande fréquentielle du signal cible considéré.

Suivant un autre exemple non limitatif, le signal de calibration est un signal du type à spectre étalé, par exemple une fréquence porteuse modulée par un code prédéfini d'étalement de spectre présentant de bonnes propriétés d'autocorrélation tel qu'une séquence pseudo-aléatoire de type PN (« Pseudo-Random Noise »), Gold, etc. Du fait de l'étalement de spectre, la densité spectrale de puissance du signal de calibration peut être rendue arbitrairement faible, la corrélation par le code d'étalement de spectre introduisant un gain de traitement d'autant plus important que le code d'étalement de spectre est long.

Un tel signal de calibration permet en outre, par corrélation des signaux reçus par le code d'étalement de spectre, de déterminer également les variations de différence d'instants de réception du signal de calibration sur respectivement la première antenne de réception 32a et la seconde antenne de réception 32b de la base de réception, et/ou les variations de différence de temps de propagation sur les chaînes de réception entre les première et seconde antennes de réception 32a, 32b et le dispositif 36 de traitement.

Dans un mode préféré de mise en oeuvre, la bande fréquentielle du signal de calibration est de largeur supérieure à celle du signal cible.

De telles dispositions permettent de resynchroniser les signaux reçus sur respectivement la première antenne de réception 32a et la seconde antenne de réception 32b. Ceci s'avère particulièrement avantageux dans le cas où lesdits signaux reçus sont numérisés par des convertisseurs analogique/numérique asynchrones, par exemple en aval des points d'injection du signal de calibration dans les première et seconde chaînes de réception 31a, 31b. Les signaux numériques obtenus après numérisation peuvent alors être transmis au dispositif 36 de traitement par un réseau de communication de type Ethernet, etc. Les signaux numériques sont alors resynchronisés par le dispositif 36 de traitement par corrélation avec le signal de calibration émis.

La figure 5 représente schématiquement des exemples de spectres fréquentiels de signaux de calibration générant peu d'interférences sur le signal cible émis par le satellite 20.

Il est à noter que plusieurs types de signal cible peuvent être considérés. Suivant un premier exemple, le signal cible est un signal prédéfini connu à priori du système 30 de calibration, tel qu'un signal CW émis par le satellite 20 (par exemple un signal CW émis pour faciliter le pointage d'antennes sensiblement à la surface de la Terre dans la direction dudit satellite, un résidu de porteuse d'un signal de télémesure, etc.).

Suivant un autre exemple, le signal cible est un signal non connu a priori, tel qu'un signal de charge utile (c'est-à-dire un signal correspondant à des données reçues par le satellite 20 d'un terminal terrestre et/ou d'une station sol, et réémises en direction de la Terre par ledit satellite, généralement après décalage en fréquences et éventuellement après régénération des données reçues à bord dudit satellite).

La figure 5 représente schématiquement plusieurs spectres fréquentiels de signaux émis par le satellite 20 :
- un spectre fréquentiel B_{TM} d'un signal de télémesure ;
- trois spectres fréquentiels B₁, B₂ et B₃, plus larges que le spectre fréquentiel B_{TM}, chacun desdits spectres fréquentiels B₁, B₂ et B₃ correspondant à un signal de charge utile du satellite 20.

Le spectre fréquentiel du signal cible émis par le satellite 20 peut être l'un quelconque des spectres fréquentiels B₁, B₂, B₃ et B_{TM}.

La figure 5 représente également le spectre fréquentiel du bruit thermique, dont la densité spectrale de puissance est, dans l'exemple représenté, la même pour toutes les fréquences, égale à une valeur désignée par N₀. Les spectres fréquentiels B₁, B₂, B₃ et B_{TM} présentent tous une densité spectrale de puissance maximale supérieure à N₀.

Sur la figure 5, trois exemples de spectres fréquentiels possibles pour le signal de calibration sont représentés.

Suivant un premier exemple, le signal de calibration est un signal sensiblement sinusoïdal, de spectre fréquentiel S₁. Le spectre fréquentiel S₁ est de densité spectrale de puissance maximale supérieure à N₀, se trouve entre les spectres fréquentiels B₁ et B₂, et ne présente de recouvrement avec aucun des spectres fréquentiels B₁, B₂, B₃ et B_{TM}.

Suivant un second exemple, le signal de calibration est un signal du type à spectre étalé, de spectre fréquentiel S₂. Le spectre fréquentiel S₂ présente un recouvrement avec le spectre fréquentiel B_{TM}, toutefois la densité spectrale de puissance maximale du spectre fréquentiel S₂ est inférieure à N₀. Le spectre fréquentiel S₂ ne présente pas de recouvrement avec les spectres fréquentiels B₁, B₂, et B₃.

Suivant un troisième exemple, le signal de calibration est un signal du type à spectre étalé, de spectre fréquentiel S₃. Le spectre fréquentiel S₃ est de densité spectrale de puissance maximale inférieure à N₀ et ne présente de recouvrement avec aucun des spectres fréquentiels B₁, B₂, B₃ et B_{TM}.

En pratique, la réception des signaux de charge utile requiert, pour extraire les données non connues a priori incluses dans lesdits signaux de charge utile, d'utiliser des antennes de réception à grand gain et donc très directives dirigées vers le satellite dont on cherche à recevoir lesdits signaux de charge utile. En effet, un satellite en orbite GEO se trouve à une distance de la Terre d'environ 37000 kilomètres, de sorte qu'il s'avère nécessaire d'avoir un gain d'antenne important dans la direction dudit satellite pour permettre l'extraction des données incluses dans lesdits signaux de charge utile.

Il est à noter que, si les première et seconde antennes de réception 32a, 32b ne sont utilisées que pour des mesures de phase utile d'un signal cible émis par le satellite 20, celles-ci ne doivent pas nécessairement être dimensionnés pour permettre l'extraction des données incluses dans lesdits signaux de charge utile dudit satellite 20. Dans un tel cas, l'utilisation d'antennes de réception peu directives est possible pour les mesures de phase utile, d'autant plus que les instabilités de phase, introduites par les première et seconde chaînes de réception 31a, 31b sont compensées grâce à l'émission et au traitement du signal de calibration. Dans le cas d'un satellite en orbite GEO, une antenne de réception peut être considérée comme peu directive dès lors qu'elle présente un lobe principal de rayonnement de largeur égale ou supérieure à 10°. Dans un mode préféré de réalisation du système 30 de calibration, la première antenne de réception 32a et la seconde antenne de réception 32b de la base de réception sont des antennes présentant chacune un lobe principal de rayonnement de largeur égale ou supérieure à 20°, voire égale ou supérieure à 30°.

L'utilisation de première et seconde antennes de réception 32a, 32b peu directives permet de réduire le coût de fabrication du système 30 de calibration.

En outre, du fait qu'elles sont peu directives, de telles première et seconde antennes de réception peuvent être dirigées de sorte à avoir dans leur lobe principal de rayonnement plusieurs satellites en orbite GEO. Un tel système 30 de calibration peut alors être mis en oeuvre, sans avoir à changer l'orientation desdites première et seconde antennes de réception 32a, 32b, pour calibrer simultanément les différences de phase utile de signaux cibles émis par plusieurs satellites.

De manière plus générale, la portée de la présente invention ne se limite pas aux modes de mise en oeuvre et de réalisation décrits ci-dessus à titre d'exemples non limitatifs, mais s'étend au contraire à toutes les modifications à la portée de l'homme de l'art.

Par exemple, on a considéré précédemment que l'antenne d'émission 37, les première et seconde antennes de réception 32a, 32b et les moyens d'injection 33a, 33b étaient fixes les uns par rapport aux autres. De telles dispositions permettent de considérer que les variations de la différence de phase de calibration sont essentiellement dues à l'instabilité de phase des première et seconde chaînes de réception 31a, 31b.

Lorsque l'antenne d'émission 37, les première et seconde antennes de réception 32a, 32b et les moyens d'injection 33a, 33b ne sont plus fixes les uns par rapport aux autres, la modification des positions relatives entraîne une variation de phase qui s'ajoute à l'instabilité de phase des première et seconde chaînes de réception 31a, 31b, et qui peut affecter différemment les différences de phase utile et les différences de phase de calibration. Cela peut se produire notamment lorsque les première et seconde antennes de réception 32a, 32b sont montées mobiles afin de suivre le déplacement d'un satellite en orbite défilante, en cas de vent, etc. De telles variations de phase peuvent néanmoins être compensées par d'autres moyens.

Suivant un exemple non limitatif, on établit préalablement des tables de calibration associant des différences de phase de calibration associées à différents jeux de positions relatives de l'antenne d'émission 37, des première et seconde antennes de réception 32a, 32b et des moyens d'injection 33a, 33b. Ensuite, au cours de la calibration de la différence de phase utile, on estime les positions relatives desdits centres de phase, et les tables de calibration permettent de retrouver la variation de différence de phase de calibration associée auxdites positions relatives estimées. Cette variation de différence de phase de calibration, induite par une variation de la géométrie du système 30 de calibration, peut alors être compensée sur les mesures de différence de phase de calibration. Après cette compensation, les variations résiduelles des mesures de différence de phase de calibration peuvent être considérées comme étant essentiellement induites par l'instabilité de phase des première et seconde chaînes de réception 31a, 31b.

Pour déterminer lesdites positions relatives, l'antenne d'émission 37, les première et seconde antennes de réception 32a, 32b et les moyens d'injection 33a, 33b sont par exemple équipés de capteurs de position, considérés comme connus de l'homme de l'art. Alternativement, plusieurs antennes d'émission 37, considérées comme fixes ou bien équipées de tels capteurs de position, sont utilisées pour déterminer les positions des première et seconde antennes de réception 32a, 32b et des moyens d'injection 33a, 33b par triangulation.

De manière plus générale, on comprend également que l'invention n'est pas limitée à un nombre particulier d'antennes de réception, mais s'étend au contraire à un nombre Nb (Nb ≥ 2) quelconque d'antennes de réception.

En outre, l'invention concerne la calibration d'une différence de phase utile, qui est par exemple utilisée pour estimer la direction d'arrivée du signal cible. La direction d'arrivée du signal cible est par exemple déterminée en estimant préalablement une différence de marche entre les trajets suivis par le signal cible. Suivant un autre exemple non limitatif, la direction d'arrivée du signal cible met en oeuvre un algorithme de type MUSIC (voir par exemple : « Multiple Emitter Location and Signal Parameter Estimation », R. O. Schmidt, IEEE Transactions on Antennas and Propagation, Vol. 36, N°3, Mars 1986).

La description ci-avant illustre clairement que par ses différentes caractéristiques et leurs avantages, la présente invention atteint les objectifs qu'elle s'était fixés.

En particulier, on comprend que le système 30 de calibration est simple et peu coûteux à fabriquer dans la mesure où les contraintes sur les chaînes de réception sont fortement relâchées grâce à l'émission et au traitement du signal de calibration, et grâce aux moyens d'injection 33a, 33b.

## Revendications

1. Système (30) de calibration d'une différence de phase, dite « différence de phase utile », entre des signaux correspondant à un signal radioélectrique émis par un engin (20) spatial ou aérien, dit « signal cible », reçu par respectivement une première chaîne de réception (31a) et une seconde chaîne de réception (31b), ladite première chaîne de réception (31a) et ladite seconde chaîne de réception (31b) comportant respectivement une première antenne de réception (32a) et une seconde antenne de réception (32b) formant une base de réception terrestre, lesdites première antenne de réception (32a) et seconde antenne de réception (32b) comportant chacune une source et un réflecteur principal adapté à réfléchir le signal cible en direction de ladite source, **caractérisé en ce que** ledit système (30) comporte un émetteur adapté à émettre un signal radioélectrique, dit « signal de calibration », en direction de la base de réception, au moyen d'une antenne d'émission (37) terrestre, et **en ce que** la première chaîne de réception (31a) et la seconde chaîne de réception (31b) comportent des moyens de réception respectifs, dits « moyens d'injection » (33a, 33b), distincts des réflecteurs principaux (321a, 321b) et adaptés à injecter le signal de calibration reçu par voie aérienne de l'antenne d'émission (37) dans respectivement ladite première chaîne de réception (31a) et dans ladite seconde chaîne de réception (31b) du signal cible.

2. Système (30) selon la revendication 1, **caractérisé en ce que** les moyens d'injection de la première chaîne de réception (31a) ou de la seconde chaîne de réception (31b) comportent un réflecteur additionnel adapté à réfléchir le signal de calibration en direction de la source, dit « réflecteur de calibration ».

3. Système (30) selon la revendication 1, **caractérisé en ce que** les moyens d'injection de la première chaîne de réception (31a) ou de la seconde chaîne de réception (31b) comportent une antenne de réception additionnelle dirigée vers l'antenne d'émission (37), dite « antenne de calibration », et un module de couplage des sorties respectives de la source et de l'antenne de calibration.

4. Système (30) selon l'une des revendications 1 à 3, **caractérisé en ce qu'**il comporte :
- des moyens adaptés à mesurer une différence de phase, dite « différence de phase de calibration », entre des signaux correspondant au signal de calibration injecté dans respectivement la première chaîne de réception (31a) et la seconde chaîne de réception (31b),
- des moyens adaptés à compenser des variations des mesures de différence de phase de calibration sur des mesures de différence de phase utile.

5. Système (30) selon la revendication 4, **caractérisé en ce que** les moyens adaptés à mesurer la différence de phase de calibration sont configurés pour effectuer soit une corrélation des signaux injectés dans respectivement la première chaîne de réception (31a) et la seconde chaîne de réception (31b) avec le signal de calibration émis, soit une analyse desdits signaux injectés dans respectivement la première chaîne de réception (31a) et la seconde chaîne de réception (31b) au moyen d'une FFT ou d'une PLL.

6. Système (30) selon l'une des revendications précédentes, **caractérisé en ce que** la première antenne de réception (32a) et la seconde antenne de réception (32b) de la base de réception sont des antennes présentant chacune un lobe principal de rayonnement de largeur égale ou supérieure à 10°.

7. Système (30) selon la revendication 6, **caractérisé en ce que**, l'engin (20) étant un satellite en orbite géostationnaire, la première antenne de réception (32a) et la seconde antenne de réception (32b) sont agencées de sorte à avoir dans leur lobe principal de rayonnement plusieurs satellites en orbite géostationnaire.

8. Système (30) selon l'une des revendications précédentes, **caractérisé en ce que**, la première chaîne de réception (31a) et la seconde chaîne de réception (31b) comportant chacune au moins un module de conversion en fréquence, les moyens d'injection sont adaptés à injecter le signal de calibration dans la première chaîne de réception (31a) et la seconde chaîne de réception (31b) en des points d'injection respectifs situés en amont de chaque module de conversion en fréquence.

9. Système (30) selon l'une des revendications précédentes, **caractérisé en ce que**, la première chaîne de réception (31a) et la seconde chaîne de réception (31b) comportant chacune au moins un amplificateur, les moyens d'injection sont adaptés à injecter le signal de calibration dans la première chaîne de réception (31a) et la seconde chaîne de réception (31b) en des points d'injection respectifs situés en amont de chaque amplificateur.

10. Système (30) selon l'une des revendications précédentes, **caractérisé en ce que** la première antenne de réception (32a) et la seconde antenne de réception (32b) sont agencées à une distance l'une de l'autre supérieure à la longueur d'onde du signal cible, et inférieure à un kilomètre.

11. Système (30) selon l'une des revendications précédentes, **caractérisé en ce que** la distance, entre l'antenne d'émission (37) et au moins une parmi la première antenne de réception (32a) et la seconde antenne de réception (32b), est inférieure à la distance entre ladite première antenne de réception (32a) et ladite seconde antenne de réception (32b).

12. Système (30) selon l'une des revendications précédentes, **caractérisé en ce que** l'émetteur est configuré pour émettre un signal de calibration présentant un recouvrement fréquentiel avec le signal cible.

13. Système (30) selon l'une des revendications précédentes, **caractérisé en ce que** l'émetteur est configuré pour émettre le signal de calibration en même temps que le signal cible.

14. Système (30) selon la revendication 13, **caractérisé en ce que** l'émetteur est configuré pour émettre le signal de calibration de façon continue.

15. Système (30) selon l'une des revendications précédentes, **caractérisé en ce que** le signal de calibration est un signal sensiblement sinusoïdal ou un signal du type à spectre étalé par un code d'étalement de spectre.

## Patentansprüche

1. System (30) zur Kalibrierung einer Phasendifferenz, "Betriebsphasendifferenz" genannt, zwischen Signalen entsprechend einem von einem Raumfahrt- oder Luftfahrtgerät (20) gesendeten Funksignal, "Zielsignal" genannt, empfangen von einer ersten Empfangskette (31a) bzw. einer zweiten Empfangskette (31b), wobei die erste Empfangskette (31a) und die zweite Empfangskette (31b) eine erste Empfangsantenne (32a) bzw. eine zweite Empfangsantenne (32b) aufweisen, die eine terrestrische Empfangsbasis bilden, wobei die erste Empfangsantenne (32a) und die zweite Empfangsantenne (32b) je eine Quelle und einen Hauptreflektor aufweisen, der das Zielsignal in Richtung der Quelle reflektieren kann, **dadurch gekennzeichnet, dass** das System (30) einen Sender aufweist, der ein Funksignal, "Kalibrierungssignal" genannt, mittels einer terrestrischen Sendeantenne (37) in Richtung der Empfangsbasis senden kann, und dass die erste Empfangskette (31a) und die zweite Empfangskette (31b) jeweilige Empfangseinrichtungen, "Einspeiseeinrichtungen" (33a, 33b) genannt, aufweisen, die sich von den Hauptreflektoren (321a, 321b) unterscheiden und geeignet sind, das auf dem Luftweg von der Sendeantenne (37) empfangene Kalibrierungssignal in die erste Empfangskette (31a) bzw. die zweite Empfangskette (31b) des Zielsignals einzuspeisen.

2. System (30) nach Anspruch 1, **dadurch gekennzeichnet, dass** die Einspeiseeinrichtungen der ersten Empfangskette (31a) oder der zweiten Empfangskette (31b) einen zusätzlichen Reflektor aufweisen, der geeignet ist, das Kalibrierungssignal in Richtung der Quelle zu reflektieren, "Kalibrierungsreflektor" genannt.

3. System (30) nach Anspruch 1, **dadurch gekennzeichnet, dass** die Einspeiseeinrichtungen der ersten Empfangskette (31a) oder der zweiten Empfangskette (31b) eine zusätzliche Empfangsantenne, die zur Sendeantenne (37) gerichtet ist, "Kalibrierungsantenne" genannt, und ein Kopplungsmodul der Ausgänge der Quelle bzw. der Kalibrierungsantenne aufweisen.

4. System (30) nach einem der Ansprüche 1 bis 3, **dadurch gekennzeichnet, dass** es aufweist:
- Einrichtungen, die geeignet sind, eine Phasendifferenz, "Kalibrierungs-Phasendifferenz" genannt, zwischen dem in die erste Empfangskette (31a) bzw. die zweite Empfangskette (31b) eingespeisten Kalibrierungssignal entsprechenden Signalen zu messen,
- Einrichtungen, die geeignet sind, Änderungen der Kalibrierungs-Phasendifferenzmessungen an Betriebsphasendifferenzmessungen zu kompensieren.

5. System (30) nach Anspruch 4, **dadurch gekennzeichnet, dass** die Einrichtungen, die geeignet sind, die Kalibrierungs-Phasendifferenz zu messen, konfiguriert sind, entweder eine Korrelation der in die erste Empfangskette (31a) bzw. die zweite Empfangskette (31b) eingespeisten Signale mit dem gesendeten Kalibrierungssignal oder eine Analyse der in die erste Empfangskette (31a) bzw. zweite Empfangskette (31b) eingespeisten Signale mittels einer FFT oder einer PLL auszuführen.

6. System (30) nach einem der vorhergehenden Ansprüche, **dadurch gekennzeichnet, dass** die erste Empfangsantenne (32a) und die zweite Empfangsantenne (32b) der Empfangsbasis Antennen sind, die je eine Hauptstrahlungskeule einer Breite gleich oder größer als 10° aufweisen.

7. System (30) nach Anspruch 6, **dadurch gekennzeichnet, dass**, wenn das Gerät (20) ein Satellit in geostationärer Umlaufbahn ist, die erste Empfangsantenne (32a) und die zweite Empfangsantenne (32b) so eingerichtet sind, dass sie in ihrer Hauptstrahlungskeule mehrere Satelliten in geostationärer Umlaufbahn haben.

8. System (30) nach einem der vorhergehenden Ansprüche, **dadurch gekennzeichnet, dass**, da die Empfangskette (31a) und die zweite Empfangskette (31b) je mindestens ein Frequenzumwandlungsmodul aufweisen, die Einspeiseeinrichtungen geeignet sind, das Kalibrierungssignal in die erste Empfangskette (31a) und die zweite Empfangskette (31b) an jeweiligen Einspeisepunkten einzuspeisen, die sich stromaufwärts vor jedem Frequenzumwandlungsmodul befinden.

9. System (30) nach einem der vorhergehenden Ansprüche, **dadurch gekennzeichnet, dass**, da die erste Empfangskette (31a) und die zweite Empfangskette (31b) je mindestens einen Verstärker aufweisen, die Einspeiseeinrichtungen geeignet sind, das Kalibrierungssignal in die erste Empfangskette (31a) und die zweite Empfangskette (31b) an jeweiligen Einspeisepunkten einzuspeisen, die sich stromaufwärts vor jedem Verstärker befinden.

10. System (30) nach einem der vorhergehenden Ansprüche, **dadurch gekennzeichnet, dass** die erste Empfangsantenne (32a) und die zweite Empfangsantenne (32b) in einem Abstand zueinander angeordnet sind, der größer als die Wellenlänge des Zielsignals und kleiner als ein Kilometer ist.

11. System (30) nach einem der vorhergehenden Ansprüche, **dadurch gekennzeichnet, dass** der Abstand zwischen der Sendeantenne (37) und mindestens einer der ersten Empfangsantenne (32a) und der zweiten Empfangsantenne (32b) kleiner als der Abstand zwischen der ersten Empfangsantenne (32a) und der zweiten Empfangsantenne (32b) ist.

12. System (30) nach einem der vorhergehenden Ansprüche, **dadurch gekennzeichnet, dass** der Sender konfiguriert ist, ein Kalibrierungssignal zu senden, das eine Frequenzüberlappung mit dem Zielsignal aufweist.

13. System (30) nach einem der vorhergehenden Ansprüche, **dadurch gekennzeichnet, dass** der Sender konfiguriert ist, das Kalibrierungssignal gleichzeitig mit dem Zielsignal zu senden.

14. System (30) nach Anspruch 13, **dadurch gekennzeichnet, dass** der Sender konfiguriert ist, das Kalibrierungssignal kontinuierlich zu senden.

15. System (30) nach einem der vorhergehenden Ansprüche, **dadurch gekennzeichnet, dass** das Kalibrierungssignal ein im Wesentlichen sinusförmiges Signal oder ein Signal von der Art mit durch einen Spreizspektrumscode gespreiztem Spreizspektrum ist.

## Claims

1. System (30) for calibrating a phase difference, referred to as "useful phase difference", between signals corresponding to a radioelectric signal emitted by an aircraft or spacecraft (20), referred to as "target signal", and received by a first reception chain (31a) and a second reception chain (31b), respectively, said first reception chain (31a) and said second reception chain (31b) respectively including a first reception antenna (32a) and a second reception antenna (32b) forming a terrestrial reception base, said first and second reception antennae (32a, 32b) each including a source and a main reflector adapted for reflecting the target signal in the direction of said source, **characterized in that** said system (30) comprises an emitter adapted for emitting a radioelectric signal, referred to as "calibration signal", in the direction of the reception base, by means of a terrestrial emission antenna (37), and **in that** the first reception chain (31a) and the second reception chain (31b) comprise respective receiving means, referred to as "injection means" (33a, 33b), that are distinct from the main reflectors (321a, 321b) and that are adapted for injecting the calibration signal received over-air from the emission antenna (37) into said first reception chain (31a) and into said second reception chain (31b) of the target signal, respectively.

2. System (30) according to Claim 1, **characterized in that** the injection means of the first reception chain (31a) or the second reception chain (31b) comprise an additional reflector adapted for reflecting the calibration signal in the direction of the source, referred to as "calibration reflector".

3. System (30) according to Claim 1, **characterized in that** the injection means of the first reception chain (31a) or second reception chain (31b) comprise an additional reception antenna that is directed towards the emission antenna (37), referred to as "calibration antenna", and a module for coupling respective outputs of the source and the calibration antenna.

4. System (30) according to one of Claims 1 to 3, **characterized in that** it comprises:
- means adapted for measuring a phase difference, referred to as "calibration phase difference", between signals corresponding to the calibration signal injected into the first reception chain (31a) and the second reception chain (31b), respectively;
- means adapted for compensating variations in the calibration phase difference measurements on the useful phase difference measurements.

5. System (30) according to Claim 4, **characterized in that** the means adapted for measuring the calibration phase difference are configured either to correlate the signals injected respectively into the first reception chain (31a) and the second reception chain (31b) with the emitted calibration signal, or to analyse said signals injected respectively into the first reception chain (31a) and the second reception chain (31b) by means of an FFT or a PLL.

6. System (30) according to one of the preceding claims, **characterized in that** the first reception antenna (32a) and the second reception antenna (32b) of the reception base are antennae each having a main radiation lobe of width larger than or equal to 10°.

7. System (30) according to Claim 6, **characterized in that**, the craft (20) being a satellite in geostationary orbit, the first reception antenna (32a) and the second reception antenna (32b) are arranged so as to have in their main radiation lobe a plurality of satellites in geostationary orbit.

8. System (30) according to one of the preceding claims, **characterized in that**, the first reception chain (31a) and the second reception chain (31b) including each at least one frequency conversion module, the injection means are adapted for injecting the calibration signal into the first reception chain (31a) and second reception chain (31b) at respective injection points located upstream of each frequency conversion module.

9. System (30) according to one of the preceding claims, **characterized in that**, the first reception chain (31a) and the second reception chain (31b) each including at least one amplifier, the injection means are adapted for injecting the calibration signal into the first reception chain (31a) and second reception chain (31b) at respective injection points located upstream of each amplifier.

10. System (30) according to one of the preceding claims, **characterized in that** the first reception antenna (32a) and the second reception antenna (32b) are arranged at a distance from each other larger than the wavelength of the target signal, and smaller than one kilometre.

11. System (30) according to one of the preceding claims, **characterized in that** the distance, between the emission antenna (37) and at least one from among the first reception antenna (32a) and the second reception antenna (32b), is smaller than the distance between said first reception antenna (32a) and said second reception antenna (32b).

12. System (30) according to one of the preceding claims, **characterized in that** the emitter is configured to emit a calibration signal having a frequency overlap with the target signal.

13. System (30) according to one of the preceding claims, **characterized in that** the emitter is configured to emit the calibration signal at the same time as the target signal.

14. System (30) according to Claim 13, **characterized in that** the emitter is configured to emit the calibration signal continuously.

15. System (30) according to one of the preceding claims, **characterized in that** the calibration signal is a substantially sinusoidal signal or a spread-spectrum signal spread using a spectrum spreading code.
